# EUROPÄISCHE PATENTSCHRIFT

(11) **EP 1 886 643 B1**
(45) Veröffentlichungstag und Bekanntmachung des Hinweises auf die Patenterteilung: **04.04.2018**
(21) Anmeldenummer: 07009726.6
(22) Anmeldetag: 15.05.2007
(51) Int. Cl.: A61C 19/00

(54) **Lichthärtgerät**
Light hardening device
Appareil de durcissement à la lumière

(30) Priorität: 07.08.2006 DE 102006036828
(43) Veröffentlichungstag der Anmeldung: 13.02.2008
(73) Patentinhaber: Ivoclar Vivadent AG, 9494 Schaan (LI)
(72) Erfinder: Plank, Wolfgang, 6830 Rankweil (AT); Senn, Bruno, 9470 Buchs (AT)
(74) Vertreter: Baronetzky, Klaus

(56) Entgegenhaltungen:
- US-A- 6 068 474
- US-A1- 2004 043 351
- US-A1- 2005 231 983
- US-B1- 6 171 105

## Beschreibung

Die Erfindung betrifft ein Lichthärtgerät, gemäß dem Oberbegriff von Anspruch 1.

Lichthärtgeräte, bei denen die von der Lichtquelle erzeugte Wärme über Kühlkörper abgeführt wird, die in der Regel von einem Gebläse beaufschlagt sind, sind seit langem bekannt. So zeigt die DE-GM 81 35 468 ein Dental-Photopolymerisationsgerät, bei dem ein Kühlkörper dort anfallende Wärme ableiten soll. Der Kühlkörper liegt im Kühlluftstrom eines Kühlgebläses.

In neuerer Zeit sind Lichthärtgeräte bekannt geworden, die mit ausgesprochen hoher Leistung arbeiten. Die Leistung wird entweder durch LEDs oder durch Laserdioden erzeugt und dient der Polymerisation des Dentalrestaurationsteils, bei Handgeräten typischerweise im Mund des Patienten.

Ein Beispiel für ein derartiges Lichthärtgerät, das mit einer Laserdiode arbeitet, ist aus der DE 37 19 561 zu entnehmen. Bei dieser Lösung ist ein Kühlkörper mit Kühlrippen an der Laserdiode in Wärmeleitverbindung angebracht. Die Steuerelektronik ist in einem separaten und staubgeschützten Kasten aufgenommen, der von dem Kühlkörper deutlich beabstandet ist.

Ferner ist es gemäß der DE 102 14 366 A1 der vorliegenden Anmelderin bekannt geworden, eine gedruckte Schaltung seitlich eines Kühlkörpers in Schlitzen zu realisieren, die zwischen Kühlrippen vorgesehen sind. Hierdurch werden die betreffenden Kühlrippen praktisch in ihrer Funktion ausgeschaltet, was für das Verhältnis zwischen Kühlwirkung und Gewicht ungünstig ist.

Ferner ist auch die Verwendung von sogenannten Heat Pipes vorgeschlagen worden. Derartige Heat Pipes sind seit längerem bekannt und dienen dazu, an einer Stelle erzeugte Wärme an eine entfernte Stelle zu leiten und dort abzuführen. Für Lichthärtgeräte als Handgeräte haben sich derartige Lösungen jedoch als eher unhandlich herausgestellt.

Lichthärtgeräte müssen - gerade als Handgeräte - besonders kompakt sein. Daher werden häufig von einem Kühlluftstrom, der über ein Gebläse erzeugt wird, beaufschlagte Kühlkörper eingesetzt, um die von der Lichtquelle erzeugte Wärme abzuführen. Andererseits darf der Kühlluftstrom nicht im Bereich der Lichtquelle, also an der Vorderseite des Lichthärtgeräts ausblasen, da ansonsten der Patient und die Behandlungsstelle von dem austretenden Kühlluftstrom beeinträchtigt würde.

Bei einem geringen zur Verfügung stehenden Querschnitt für den Kühlluftstrom muss für den Wärmetausch ein entsprechend vergrößerter Druckaufbau durch das Gebläse erfolgen, um zur Überwindung der Strömungswiderstände den erwünschten Kühlluftstrom bereitzustellen. Bekanntlich erlaubt ein Gebläse in Saugbetrieb höchstens die Bereitstellung von einer Druckdifferenz von einem Bar, wobei dieser Wert auch nur theoretisch erreichbar ist.

Für die Bereitstellung einer größeren Druckdifferenz ist daher die Realisierung eines Gebläses im Druckbetrieb erforderlich.

Wenn die Strömungsrichtung eines Kühlerstroms bei einem Lichthärtgerät nun von vorne nach hinten erwünscht ist, müsste insofern das Gebläse im vorderen Bereich des Lichthärtgeräts angeordnet sein, wenn es im Druckbetrieb arbeiten soll. Dies verträgt sich andererseits nicht mit der Realisierung der Lichtquelle an dieser Stelle.

Für die Bereitstellung der elektrischen Ansteuerung der Lichtquelle sind Bauelemente erforderlich, die ebenfalls im Lichthärtgerät untergebracht werden müssen. Nachdem der Kühlkörper - abgesehen von den Akkumulatoren - das schwerste Bauteil in dem Lichthärtgerät ist, ist es erforderlich, eine ausgewogene Anordnung der Bauelemente zu realisieren, wobei es auch bereits bekannt geworden ist, die Bauelemente im Griff des Lichthärtgeräts unterzubringen. US 6 068 474 A offenbart ein Lichthärtgerät, das pistolenförmig ausgebildet ist, wobei ein Gebläse an der von der Lichtquelle abgewandten Stirnseite des Kühlkörpers angeordnet ist. Daher liegt der Erfindung die Aufgabe zugrunde, ein Lichthärtgerät gemäß dem Oberbegriff von Anspruch 1 zu schaffen, das einen kompakten Aufbau ohne Nachteile bei der Ergonomie für ein als Handgerät ausgebildetes Lichthärtgerät ermöglicht.

Diese Aufgabe wird erfindungsgemäß durch Anspruch 1 gelöst. Vorteilhafte Weiterbildungen ergeben sich aus den Unteransprüche.

Erfindungsgemäß besonders günstig ist es, wenn die von der Lichtquelle erzeugte Wärme umgehend von der Lichtquelle abgeführt wird. Hierzu ist es erfindungsgemäß besonders günstig, wenn ein Wärmeleiterstab, der beispielsweise einen Kupferkern aufweisen kann, mit niedrigem Wärmewiderstand mit der Lichtquelle gekoppelt ist und sich von der Lichtquelle nach hinten erstreckt.

Der Wärmeleiterstab führt dann die Wärme der Lichtquelle nach hinten ab, also weg vom Patienten. Die Kühlung kann dann über am rückwärtigen Ende des Wärmeleiterstabs angebrachte Kühlrippen erfolgen. Erfindungsgemäß lässt sich erreichen, dass nahezu der gesamte Lauf des im Wesentlichen pistolenförmigen Lichthärtgeräts für die Kühlung ausgenutzt wird. Das Gebläse kann dann unmittelbar an dem rückwärtigen Kühlkörperteil an die dortigen Kühlrippen angeflanscht werden.

Erfindungsgemäß besonders vorteilhaft ist es, wenn die Kühlung über einen guten Wärmeleiter, der bevorzugt als metallischer Wärmeleitstab ausgebildet ist, erfolgt. Dieser ist lageunabhängig und vermag in allen Zuständen die von der Lichtquelle eingebrachte Wärme sicher nach hinten abzuleiten. Durch die Verwendung eines massiven Metallstabs lässt sich dessen Wärmekapazität ausnutzen, so dass durch die eingeschaltete Lichtquelle schwerpunktmäßig zunächst die Wärmekapazität des Kupferkerns ausgenutzt und dieser aufgeheizt wird. Über eine an sich bekannte Nachlaufsteuerung des Gebläses lässt sich dann die eingebrachte Wärme sicher und über die Zeit verteilt abführen. Die Kombination der Wärmeableitung recht weit nach hinten in Verbindung mit der Pufferkapazität ist besonders günstig, denn beim Nachlaufen stört das Gebläse regelmäßig nicht, da das Lichthärtgerät dann bereits abgestellt ist.

Erfindungsgemäß besonders günstig ist es, dass Bauelemente mindestens teilweise im Kühlluftstrom des Kühlluftkörpers angeordnet sind. Hierdurch lässt sich zum einen Platz sparen, denn die Unterbringung der Bauelemente ist dann kompakt möglich. Überraschend stören gerade bei einer hohen durch das Gebläse erzeugten Druckdifferenz die zusätzlichen Bauelemente gegenüber dem Kühlkörper als Hauptwiderstand nicht oder nahezu nicht. Dennoch können sie auch besonders gut gekühlt werden, was gerade bei Leistungshalbleitern für die Ansteuerung der Lichtquelle besonders relevant ist.

Wenn beispielsweise ein Mehrfachanordnung von Leuchtdioden für die Lichtquelle verwendet wird, kann die abgegebene Leistung durchaus im Bereich von 30 W oder höher liegen, wobei die Ansteuerung aus EMV-Gründen zweckmäßig ungetaktet erfolgt, so dass entsprechend große Verlustleistungen der Leistungshalbleiter anfallen.

Gleichsam automatisch werden die Bauelemente, die sich im Kühlluftstrom befinden, gekühlt. Zusätzlich erfüllt auch die Printplatte für die Aufnahme der Bauelemente eine Doppelfunktion, denn dort erfolgt nicht nur die Kontaktierung und Montage der Bauelemente sondern zugleich auch das Leiten der Luftströmung die den Kühlluftstrom bildet. Hierdurch ist es sichergestellt, dass der Kühlluftstrom für seine Führung nicht eines gesonderten Kunststoffeinsatzes bedarf, so dass in überraschend einfacher Weise das hierfür erforderliche zusätzliche Gewicht entfallen kann.

Besonders günstig in diesem Zusammenhang ist es, dass die Printplatte dann praktisch als zusätzliche Kühlfläche eingesetzt werden kann. Durch die typischerweise auf der Printplatte realisierten Kupferschichten wird die Wärme von strombeaufschlagten Widerständen usw. über die Printplatte verteilt, und nachdem die Printplatte sich zur Führung des Kühlluftstroms erstreckt, der Kühlluftstrom also insofern an ihr entlang streicht, wird sie mitgekühlt.

Erfindungsgemäß ist es vorgesehen, dass die Printplatte der Führung des Kühlluftstroms dient. Hierzu kann die Printplatte in beliebiger geeigneter Weise flächig ausgebildet sein, so dass der Kühlluftstrom auf einer Seite, nämlich bevorzugt auf der, auf der sie mit Bauelementen hauptsächlich bestückt ist, entlang streicht. Bevorzugt ist in diesem Zusammenhang die Realisierung von mindestens zwei, weiter bevorzugt von 4 Printplatten, die zueinander im Winkel befestigt sind, so dass sie praktisch eine Art Quader bilden, in dem der Kühlluftstrom strömt.

Es versteht sich, dass anstelle dessen auch eine beliebige andere Formgebung der Printplatten und damit des Kühlluftstroms realisierbar ist.

Beispielsweise kann auch ein Teil der Printplatte oder eine zusätzlich kleine Printplatte nach der Art einer Rippe im Kühlluftstrom stehen, so dass dort eine besonders intensive Kühlung realisiert ist.

In vorteilhafter Ausgestaltung der Erfindung ist es vorgesehen, den Kühlluftstrom im Blasbetrieb zu realisieren, aber dennoch das Gebläse für die Erzeugung des Kühlluftstroms im rückwärtigen Bereich anzuordnen. Überraschend gelingt dies mit einer Strömungsumlenkung im vorderen Bereich, also im Bereich der Lichtquelle, über welche der Kühlluftstrom umgelenkt und dann seitlichen Auslassschlitzen zugeleitet wird, die aufgrund ihres vergleichsweise großen Strömungsquerschnitts ein Ausströmen mit einer niedrigen Strömungsgeschwindigkeit erlauben.

Zugleich lässt sich erfindungsgemäß die Anordnung der Bauelemente im Kühlluftstrom besonders leicht realisieren. Hierzu sind sie radial seitlich des Wärmeleitstabs angeordnet und ragen so in Strömungsrichtung hinter den Haupt-Kühlrippen in den Kühlluftstrom hinein.

Erfindungsgemäß ist es auch günstig, wenn mindestens eine der Printplatten schwenkbeweglich an einer weiteren Printplatte gelagert ist. Auf diese Weise lässt sich zu Reparatur- und Montagezwecken ein leichterer Zugang zu der Printplattenanordnung gewährleisten, die beispielsweise als Quader ausgebildet sein kann aber auch einen beliebigen anderen Querschnitt, beispielsweise einen dreieckigen, fünfeckigen oder anderen Querschnitt haben kann.

Während vier Printplatten für die Printplattenanordnung bevorzugt sind, versteht es sich, das anstelle dessen der Kühlluftstrom auch von lediglich zwei Printplatten geführt sein kann, so dass die gegenüberliegende Seite durch das Gehäuse des Lichthärtgeräts oder einen zusätzlichen Kunststoffeinsatz gebildet ist.

Gemäß einer weiteren vorteilhaften Ausgestaltung der Erfindung ist es vorgesehen, dass das Lichthärtgerät Bauelemente aufweist, die sich insbesondere neben dem Wärmeleitstab aus Metall auf wenigestens einer Printplatte befinden.

Gemäß einer weiteren vorteilhaften Ausgestaltung der Erfindung ist es vorgesehen, sich wenigstens die Bauelemente an einer kühlrippenfreien Stelle befinden.

Gemäß einer weiteren vorteilhaften Ausgestaltung der Erfindung ist es vorgesehen, dass die Bauelemente und/oder die Printplatte den Kühlkörper (12) mindestens teilweise umgebend angeordnet sind.

Gemäß einer weiteren vorteilhaften Ausgestaltung der Erfindung ist es vorgesehen, dass die Bauelemente und/oder die Printplatte in radialen Freiräumen aufgenommen sind, die von den Kühlrippen des Kühlkörpers und von einem Kern des Kühlkörpers begrenzt sind.

Gemäß einer weiteren vorteilhaften Ausgestaltung der Erfindung ist es vorgesehen, dass wenigstens eine Printplatte mindestens teilweise an dem Kühlkörper gelagert ist und sich insbesondere seitlich an dem Kühlkörper entlang erstreckt.

Gemäß einer weiteren vorteilhaften Ausgestaltung der Erfindung ist es vorgesehen, dass mindestens drei Printplatten, insbesondere vier Printplatten, den Kühlkörper umgeben.

Gemäß einer weiteren vorteilhaften Ausgestaltung der Erfindung ist es vorgesehen, dass mindestens eine Printplatte gegenüber einer weiteren Printplatte beweglich gelagert ist, insbesondere schwenkbar gelagert ist.

Gemäß einer weiteren vorteilhaften Ausgestaltung der Erfindung ist es vorgesehen, dass die Printplatte, insbesondere alle Bauelemente, auf ihrer dem Kühlkörper zugewandten oder ihrer vom Kühlkörper abgewandten Seite trägt.

Gemäß einer weiteren vorteilhaften Ausgestaltung der Erfindung ist es vorgesehen, dass mindestens eine Printplatte auf dem Wärmeleitstab aus Metall des Kühlkörpers aufgebracht und dort isoliert aufliegt und insbesondere in Wärmeleitverbindung mit dem Wärmeleitstab steht.

Gemäß einer weiteren vorteilhaften Ausgestaltung der Erfindung ist es vorgesehen, dass der Wärmeleitstab aus Metall im Wesentlichen als Quader ausgebildet ist und insbesondere an allen vier Seiten von Printplatten umgeben ist.

Gemäß einer weiteren vorteilhaften Ausgestaltung der Erfindung ist es vorgesehen, dass die Bauelemente mit der Printplatte in Wärmeleitverbindung stehen und die Printplatte als Kühlement ausgebildet ist, über welches die von den Bauelementen abgegebene und in die Printplatte eingeleitete Wärme über den Kühlluftstrom abgebbar ist.

Gemäß einer weiteren vorteilhaften Ausgestaltung der Erfindung ist es vorgesehen, dass sich zwischen mindestens einer Printplatte und dem Wärmeleitstab und/oder Kühlkörper ein erster Kühlluftkanal erstreckt.

Gemäß einer weiteren vorteilhaften Ausgestaltung der Erfindung ist es vorgesehen, dass sich ein zweiter Kühlluftkanal zwischen den Printplatten und einem Gehäuse des Lichthärtgeräts oder zwischen zwei Gehäuseteilen des Lichthärtgeräts erstreckt. Erfindungsgemäß ist es vorgesehen, dass der Lichtquelle benachbart zwischen zwei Gehäuseteilen oder zwischen wenigestens einer Printplatte und dem Gehäuse eine Umlenkung für den Kühlluftstrom vorgesehen ist, über welche der Kühlluftstrom um mindestens 90°, insbesondere um mehr als 150°, umgelenkt wird.

Gemäß einer weiteren vorteilhaften Ausgestaltung der Erfindung ist es vorgesehen, dass der Kühlluftstrom von einem Gebläse erzeugt wird und die kühle Luft die Kühlrippen und insbesondere auch die Bauelemente beaufschlagt. Erfindungsgemäß ist es vorgesehen, dass das Gebläse an der von der Lichtquelle abgewandten Stirnseite des Kühlkörpers angeordnet ist. Erfindungsgemäß ist es vorgesehen, dass der Kühlluftstrom zuerst den ersten Kühlluftkanal und nach der Umlenkung den ersten Kühlluftkanal oder umgekehrt passiert.

Gemäß einer weiteren vorteilhaften Ausgestaltung der Erfindung ist es vorgesehen, dass der Kühlluftstrom nach dem Passieren der beiden Kühlluftkanäle das Gehäuse in einem Endbereich eines Handgriffes des Lichthärtgeräts verlässt.

Gemäß einer weiteren vorteilhaften Ausgestaltung der Erfindung ist es vorgesehen, dass zwei einander gegenüberliegende Printplatten zur Lichtquelle vorragen und dort Anschlussfahnen einer Stirnprintplatte kontaktieren, die sich im Wesentlichen rechtwinklig zu den Printplatten erstreckt und über welche die Lichtquelle angeschlossen ist.

Gemäß einer weiteren vorteilhaften Ausgestaltung der Erfindung ist es vorgesehen, dass der Wärmeleitstab insbesondere aus Kupfer, und der Kühlkörper, insbesondere aus Aluminium oder einer Aluminiumlegierung, besteht.

Gemäß einer weiteren vorteilhaften Ausgestaltung der Erfindung ist es vorgesehen, dass die Bauelemente, gesehen über die Längserstreckung des Kühlkörpers , in der Höhe des Wärmeleitstabs mit geringem Wärmewiderstand oder einer heat pipe angeordnet sind.

Weitere Vorteile, Einzelheiten und Merkmale ergeben sich aus der nachfolgenden Beschreibung zweier Ausführungsbeispiele der Erfindung anhand der Zeichnung.

Es zeigen:
- Fig. 1: eine Seitenansicht eines Teils eines erfindungsgemäßen Lichthärtgeräts unter Darstellung unter anderem des Kühlkörpers;
- Fig. 2: eine Stirnansicht der Ausführungsform gemäß Fig. 1 von vorne;
- Fig. 3: eine rückwärtige Ansicht der Ausführungsform gemäß Fig. 2;
- Fig. 4: eine Ansicht der Ausführungsform gemäß Fig. 1 bis 3, wobei mindestens zwei Printplatten bereits montiert sind;
- Fig. 5: eine Seitenansicht des erfindungsgemäßen Lichthärtgeräts in einem weiter montierten Zustand;
- Fig. 6: eine perspektivische Ansicht eines Kühlkörpers ohne Printplatten in einer weiteren Ausführungsform jedoch mit anmontiertem Gebläse;
- Fig. 7: eine rückwärtige Ansicht des Kühlkörpers gemäß Fig. 6, wobei Printplatten und Bauelemente anmontiert sind;
- Fig. 8: die montierte Einheit aus Kühlkörper, Gebläse und Printplatten, einschließlich der Bauelemente und der Lichtquelle;
- Fig. 9: ein Detail eines erfindungsgemäßen Lichthärtgeräts in teilweise aufgebrochener Darstellung; und
- Fig. 10: eine Seitenansicht des Lichthärtgeräts gemäß den vorstehenden Figuren.

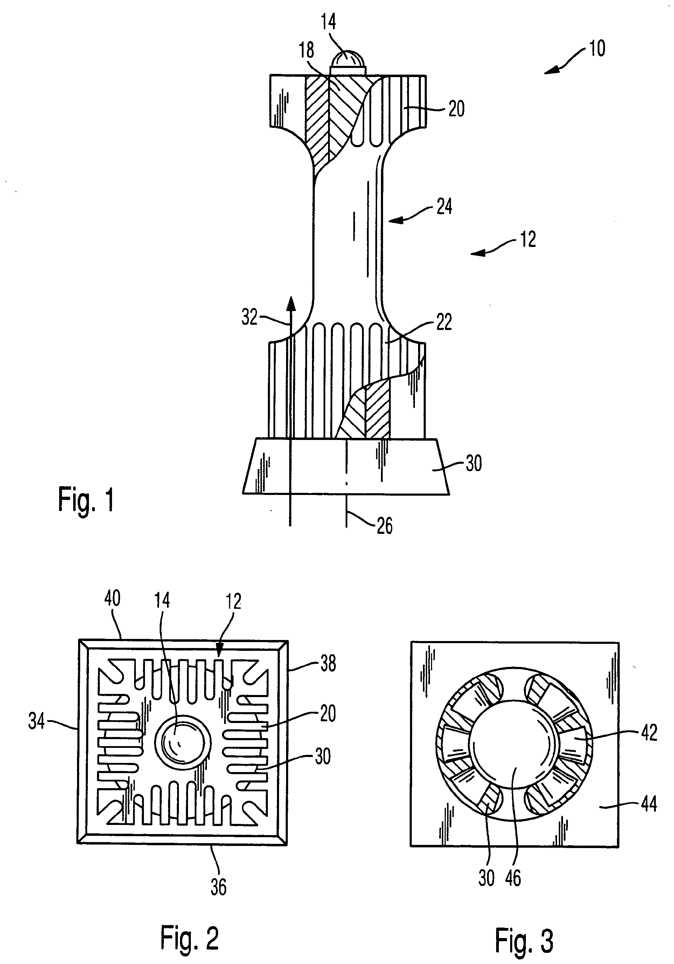

Das in Fig. 1 auszugsweise dargestellte Lichthärtgerät 10 weist einen Kühlkörper 12 auf, der im Lauf des pistolenförmigen Lichthärtgeräts angeordnet ist. In an sich bekannter Weise ist im Griff des Lichthärtgeräts ein Akkumulatorensatz sowie ein Auslöseknopf angebracht, und auf der Oberseite zusätzlich eine Anzeigevorrichtung für die Anzeige des Betriebszustands des als Handgeräts ausgebildeten Lichthärtgeräts.

Der Kühlkörper 12 trägt erfindungsgemäß eine Lichtquelle 14 an seiner vorderen Stirnseite. Die Lichtquelle 14 ist als LED oder als Mehrfachanordnung von LEDs ausgebildet und gibt sowohl Licht als auch Wärme ab. Die abgegebene Lichtleistung wird über einen Lichtleiter - ggf. über Zuhilfenahme von Reflektoren - in den Mund des Patienten geleitet, wenn der Zahnarzt die Lichthärtung des Dentalrestaurationsteils vornimmt.

Die Lichtquelle ist in guter Wärmeleitverbindung mit dem Kühlkörper 12. Der Kühlkörper 12 weist erfindungsgemäß einen sich zentral erstreckenden Wärmeleiterstab 18 als Kupferkern auf, so dass die Wärme besonders gut in axialer Richtung des länglichen Kühlkörpers 12 abgeleitet wird.

Der Kühlkörper 12 weist einen im Wesentlichen hantelartigen Aufbau auf. In seinem vorderen Bereich, also dem der Lichtquelle 14 benachbarten Bereich, erstrecken sich sternförmig Kühlrippen 20. Zusätzlich erstrecken sich in seinem hinteren Bereich ebenfalls sternförmig Kühlrippen 22, während zwischen den vorderen und den hinteren Kühlrippen 20 und 22 eine Ausnehmung 24 vorgesehen ist, die sich kreisförmig erstreckt und einen Freiraum bietet.

Sämtliche Kühlrippen 20 und 22 erstrecken sich parallel zu einer Achse 26 des Kühlkörpers 12, die mit der optischen Achse der Lichtquelle 14 zusammenfällt. Die Kühlrippen 22 sind in axialer Richtung wesentlich länger als die Kühlrippen 20. Während jede Kühlrippe 20 etwa so lang wie hoch ist, nehmen die Kühlrippen 22 immerhin etwa ein Drittel der Gesamtlänge des Kühlkörpers 12 ein.

An der rückwärtigen Stirnseite der des im Querschnitt im Wesentlichen quaderförmigen oder auch in einer modifizierten Ausgestaltung kreisförmigen Kühlkörpers 12 ist ein Gebläse 30 angeflanscht, das einen Kühlluftstrom 32 durch den Kühlkörper 12 hindurchleitet. Der Kühlluftstrom streicht an den Kühlrippen 20 und 22 entlang und durchtritt auch die Ausnehmung 24. Er ist als Druckluftstrom ausgebildet, wie es weiter unten im Einzelnen erläutert ist.

Aus Fig. 2 ist ersichtlich, in welcher Weise der Kühlkörper 12 ausgestaltet sein kann. Hier wie auch in den weiteren Figuren weisen gleiche Bezugszeichen auf gleiche oder entsprechende Teile hin.

Der Kühlkörper 12 weist im vorderen Bereich die aus Fig. 2 ersichtlichen Kühlrippen 20 auf. Durch die sich längs erstreckenden Kühlrippen 20 und 22 hindurch ist das Gebläse 30 mit seinem Strömungsauslass ersichtlich.

Das Lichthärtgerät weist den Kühlkörper 12 umgebend Printplatten 34, 36, 38 und 40 auf, die sich insofern im Wesentlichen quaderförmig erstrecken. Die Printplatten umschließen den Kühlkörper 12 vollständig und bilden insofern einen Strömungskanal für die Bereitstellung des Kühlluftstroms durch den Kühlkörper hindurch.

Aus Fig. 3 ist der Aufbau des Gebläses 30 ersichtlich. Das Gebläse 30 weist zwei einander gegenüberliegende Lufteintrittsschlitze 42 auf, die in einer Rückwand 44 des Gebläsegehäuses belassen sind. In an sich bekannter Weise wird das Gebläse 30 über einen Elektromotor 46 angetrieben.

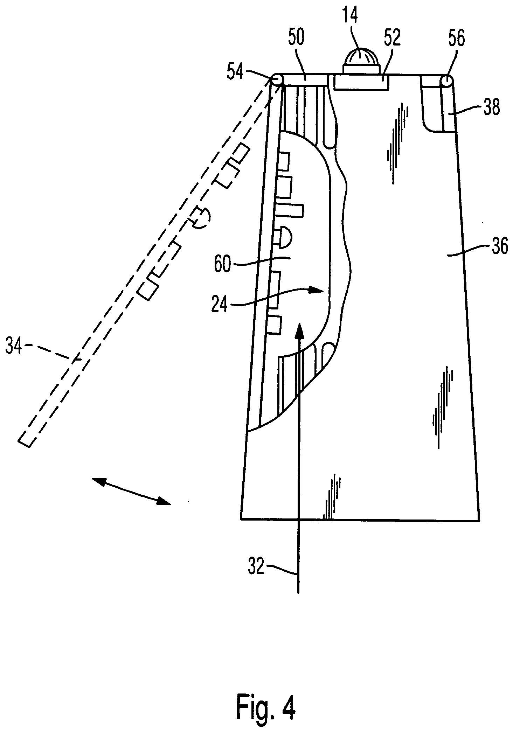

Aus Fig. 4 ist ersichtlich, in welcher Weise sich der Aufbau aus Kühlkörper und Printplatten montieren lässt. Eine vordere Printplatte 50 umgibt die Lichtquelle 14, die über ein Substrat 52 mit dem nicht dargestellten Wärmeleitstab 18 verbunden ist. Über die Printplatte 50 sind die sich im Wesentlichen achsparallele erstreckenden Printplatten gelenkig verbunden. Hierzu ist je ein Gelenk vorgesehen, wobei in Fig. 4 beispielhaft die Gelenke 54 und 56 dargestellt sind. Die Printplatte 34 ist in abgeschwenkten Zustand dargestellt, während die Printplatten 36 und 38 in fertig montiertem Zustand dargestellt sind.

Die Printplatten tragen je Bauelemente, wobei für die Printplatte 34 beispielhaft eine Vielzahl von Bauelementen 60 dargestellt ist. Die Bauelemente 60 erstrecken sich in die Ausnehmung 24 hinein und liegen insofern im Kühlluftstrom 32 des Gebläses 30. Zusätzlich sind sie in guter Wärmeleitverbindung mit der Printplatte 34 verbunden, an der großflächig ebenfalls Kühlluft entlang streicht. Hierdurch und durch die auf der Printplatte 34 vorgesehenen Kupferleiter ergibt sich ebenfalls eine gute Kühlung der Bauelemente 60.

Die Printplatten 34 bis 40 erstrecken sich nicht exakt quaderförmig, sondern leicht verjüngt nach vorne. Hierdurch ist der Strömungsquerschnitt im Bereich der rückwärtigen Kühlrippen 22 größer und im Bereich der vorderen Kühlrippen 20 geringer. Die Strömungsgeschwindigkeit ist dementsprechend im vorderen, heißen Bereich, größer, während im rückwärtigen Bereich mehr Zeit für die Kühlluft verbleibt, die Wärme aufzunehmen.

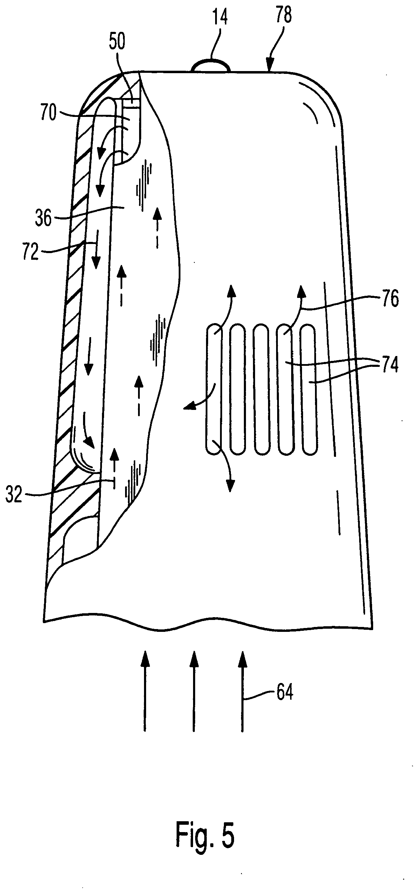

Aus Fig. 5 ist ersichtlich, wie der Kühlluftstrom 32 umgelenkt wird. Über das Gebläse wird die Kühlluft entsprechend den Pfeilen 64 zunächst in den Kühlkörper eingeleitet und strömt nach vorne, also in Richtung der Lichtquelle 14. In den vorderen Ecken der im Wesentlichen quaderförmigen Printplattenanordnung ist eine Umlenkung 70 für den Kühlluftstrom vorgesehen. In den vorderen Ecken weist die Printplattenanordnung dementsprechend praktisch relativ große und breite Schlitze auf, die eine Umlenkung des Kühlluftstroms nach hinten ermöglichen. Der Kühlluftstrom erstreckt sich dementsprechend nach hinten, entsprechend den Pfeilen 72.

Etwa in der axialen Mitte des Kühlkörpers sind sich nach außen erstreckende Kühlluftschlitze 74 ausgebildet, die großflächig den Austritt der verbrauchten Kühlluft entsprechend den Pfeilen 76 ermöglichen.

Über diese Kühlluftführung ist es möglich, eine Druckluftversorgung des Kühlluftstrom 32 bereitszustellen, wobei dennoch der vordere Bereich 78 des Lichthärtgeräts vollständig frei von Kühlluft verbleibt und insbesondere der Patient nicht angeblasen wird.

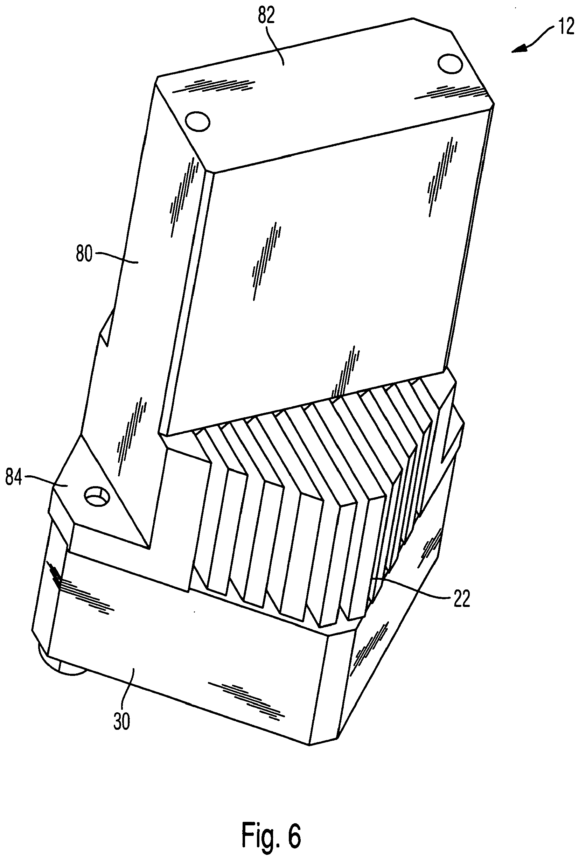

Eine weitere Ausführungsform ist aus den Figuren 6 bis 8 ersichtlich. Bei dieser Ausführungsform weist der Kühlkörper 12 einen Wärmeleitstab 80, der sich im Wesentlichen quaderförmig aus massiven, gut wärmeleitendem Metall längs erstreckt und für die Aufnahme der Lichtquelle an seiner vorderen Stirnfläche 82 vorgesehen ist.

Bei dieser Ausführungform ist der Lichtquelle benachbart keine zusätzliche Kühlrippenanordnung vorgesehen. Dafür hat der Wärmeleitstab 80 einen Kupferkern, der aus Fig. 6 nicht ersichtlich ist und weist an seinem rückwärtigen Bereich die Kühlrippen 22 auf, die insofern mit ausgesprochen geringem Wärmewiderstand mit der Lichtquelle in Verbindung stehen.

An die Kühlrippen angeflanscht ist das Gebläse 30 angebracht, dessen Außenumfang im Wesentlichen der Erstreckung der Kühlrippen entspricht, so dass eine kompakte Einheit aus dem Kühlkörper 12 und dem Gebläse 30 entsteht. Besonders günstig ist es, dass das im Wesentlichen quadratische Gehäuse des Gebläses 30 im Winkel von etwa 45° versetzt zur Quererstreckung des Wärmeleitstab 80 angeordnet ist, so dass über einen Flansch 84 das Gebläse 30 gut befestigbar ist und sich dennoch die Kühlrippen 22 über praktisch die gesamte wirksame Fläche des Gebläses 30 erstrecken.

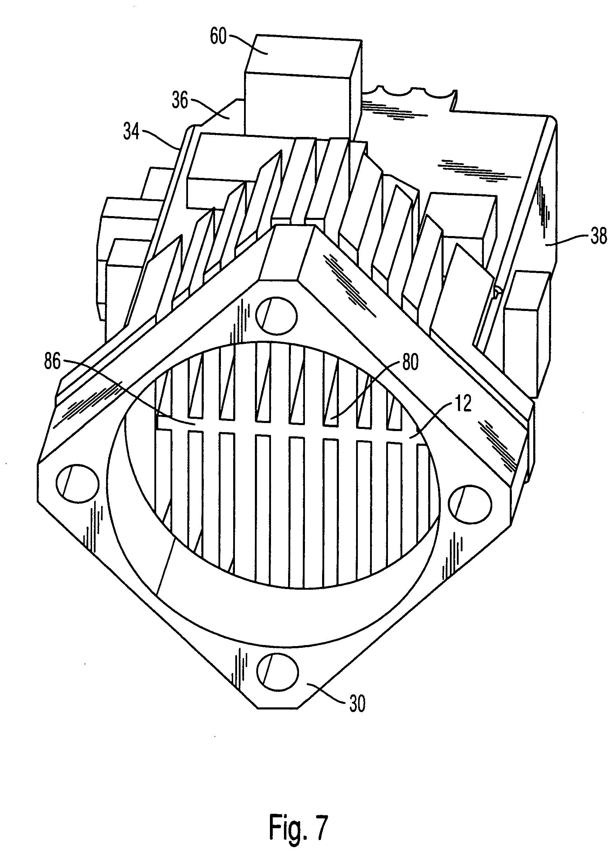

Hierzu ist es, wie aus Fig. 7 ersichtlich ist, vorgesehen, dass die Stärke des Wärmeleitstabs 80 in Querrichtung zum Gebläse 30 hin abnimmt. Anschließend an das Gebläse 30 ist der Wärmeleitstab 80 insofern auf einen schmalen Steg 86 verjüngt, dessen Breite etwa der Breite einer Kühlrippe entspricht. Hierdurch entsteht auch ein vergleichsweise geringer Strömungswiderstand für das als Radialgebläse ausgebildete Gebläse 30.

Wie aus Fig. 7 ferner ersichtlich ist, ist es vorgesehen, dass den Wärmeleitstab 80 umgebend großflächig Printplatten vorgesehen sind, von denen die Printplatten 34, 36 und 38 aus Figur 7 ersichtlich sind, wobei die Bauelemente 60 bei dieser Ausführungsform sich auf der von dem Kühlkörper abgewandten Seite der Printplatten 34 bis 38 erstrecken. Dies erlaubt eine großflächige Wärmeleitverbindung zwischen den Printplatten 34 bis 38 und dem Wärmeleitstab 80, so dass eine Festkörperkühlung für die Bauelemente 60 realisierbar ist. Zusätzlich liegen die Bauelemente 60 auch bei dieser Ausführungsform im Kühlluftstrom, und es ist bevorzugt, die besonders wärmeempfindlichen Bauelemente 60 auf der Printplatte 36 und der Printplatte 40 anzuordnen, die voll im Kühlluftstrom liegen, während der Kühlluftstrom für die Bauelemente auf den Printplatten 34 und 38 lediglich als Sekundärluftstrom vorgesehen ist.

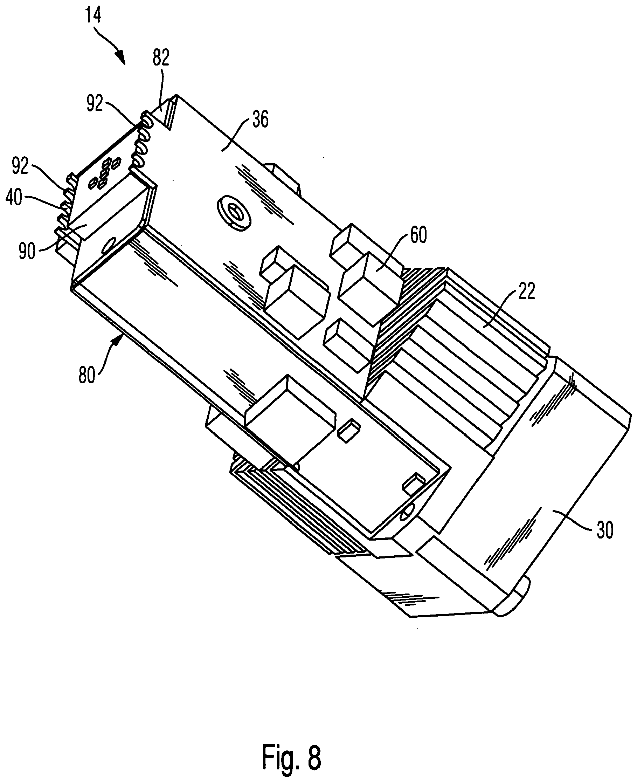

Aus Fig. 8 ist ersichtlich, in welcher Weise die Lichtquelle 14 auf der Stirnfläche 82 des Wärmeleitstabs 80 aufgebracht sein kann. Bei dieser Ausführungsform weist die Lichtquelle 14 fünf in Kreuzform angeordnete LED-Chips auf, die auf einem gemeinsamen Substrat 90 aufgebracht sind, das großflächig in Kontakt mit der Stirnfläche 82 steht, so dass die von der Lichtquelle 14 erzeugte Wärme mit sehr geringem Wärmewiderstand in den Wärmeleitstab 80 eingeleitet wird.

Bei dieser Ausführungsform sind die Printplatten 36 und 40 bis über das Substrat 90 nach vorne gezogen, so dass sie Anschlussfahnen 92 bieten, die für die Kontaktierung der nicht dargestellten Stirn-Printplatte auf dem Substrat 90 für die Versorgung der Lichtquelle zur Verfügung stehen. Die Stirn-Printplatte erstreckt sich dann zwischen den Anschlussfahnen 92 der einander gegenüberliegenden Printplatten 36 und 40.

Nachdem hier breite Kupferbahnen für die Realisierung eines geringen elektrischen Widerstands verwendet werden, wird die eingeleitete Wärme zusätzlich auch über diese Leiterbahnen in den rückwärtigen Bereich geleitet, wo durch den intensiven Kühlluftstrom, der durch das Gebläse 30 erzeugt wird, die Kühlung für die Printplatten 36 und 40 flächig realisiert ist.

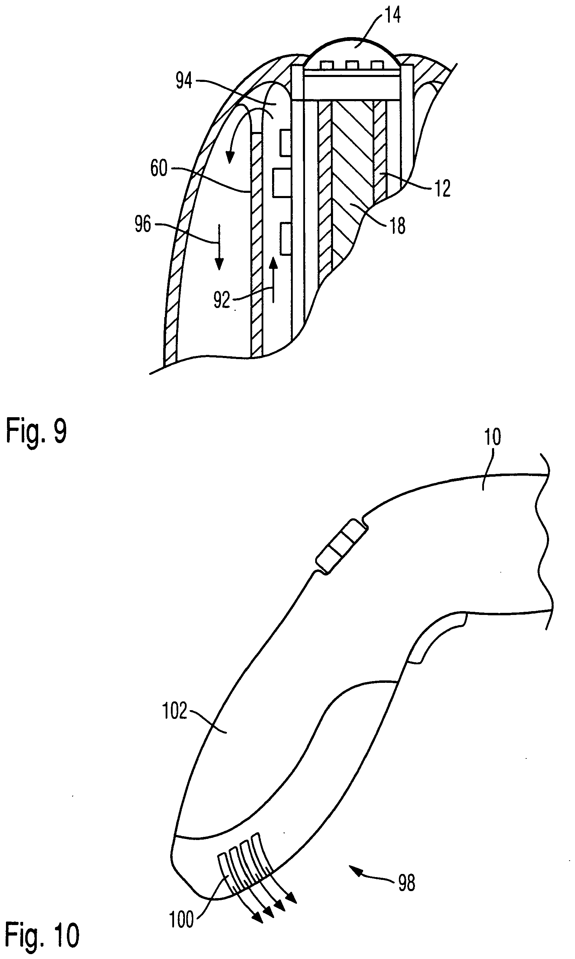

Aus Fig. 9 ist ersichtlich, dass der Kühlluftstrom bevorzugt umgelenkt wird, um die erwünschte Kühlung, insbesondere auch der Bauelemente 60 zu erzielen. Nachdem der erste Kühlluftkanal 92 im Bereich der Bauelemente passiert ist, wird der Kühlluftstrom im Bereich einer Umlenkung 94, die der Lichtquelle 14 benachbart ist, zu einem zweiten Kühlluftkanal 96 hin umgelenkt. Dort strömt die Luft innen am Gehäuse entlang und tritt - wie es aus Fig. 10 ersichtlich ist - am rückwärtigen Ende 98 an Kühlluftschlitzen 100 aus einem Handgriff 102 des pristolenförmigen Lichthärtgeräts 10 aus.

## Patentansprüche

1. Lichthärtgerät, das pistolenförmig ausgebildet ist, mit einem länglichen Kühlkörper (12), der im Lauf des pistolenförmigen Lichthärtgerätes angeordnet ist und eine LED-Lichtquelle an seiner vorderen Stirnseite trägt, die unmittelbar oder mittelbar mit einem metallischen Wärmeleitstab (18; 80), der sich zentral innerhalb des Kühlkörpers (12) hin erstreckt und einen Kupferkern aufweist, verbunden ist, wobei der Wärmeleitstab (18; 80) wenigstens mit seinem von der Lichtquelle (14) abgewandten Endbereich mit Kühlrippen (20, 22) des Kühlkörpers (12) in Wärmeleitverbindung steht, so dass die von der Lichtquelle (14) erzeugte Wärme in axialer Richtung des länglichen Kühlkörpers (12) ableitbar ist, wobei zu der Lichtquelle (14) benachbart zwischen zwei Gehäuseteilen oder zwischen wenigstens einer Printplatte (34, 36, 38, 40) und einem Gehäuse eine Umlenkung für einen Kühlluftstrom (32) vorgesehen ist, über welche der Kühlluftstrom (32) um mindestens 90° umgelenkt wird, und wobei der Kühlluftstrom (32) zuerst einen ersten Kühlluftkanal (92) und nach der Umlenkung (70, 94) einen zweiten Kühlluftkanal (96) oder umgekehrt passiert, und wobei ein Gebläse (30) an der von der Lichtquelle (14) abgewandten Stirnseite des Kühlkörpers (12) angeordnet ist.

2. Lichthärtgerät nach Anspruch 1, **dadurch gekennzeichnet, dass** das Lichthärtgerät Bauelemente (60) aufweist, die sich insbesondere neben dem Wärmeleitstab auf wenigstens einer Printplatte befinden.

3. Lichthärtgerät nach Anspruch 2, **dadurch gekennzeichnet, dass** sich wenigstens die Bauelemente (60) an einer kühlrippenfreien Stelle befinden, wobei der Kühlkörper (12) derart aufgebaut ist, dass in seinem vorderen, der Lichtquelle (14) benachbarten Bereich und in seinem hinteren Bereich sich sternförmig Kühlrippen (20, 22) erstrecken, wobei zwischen den Kühlrippen (20, 22) eine sich kreisförmig erstreckende Ausnehmung (24) die kühlrippenfreie Stelle definiert.

4. Lichthärtgerät nach einem der Ansprüche 1 bis 2, **dadurch gekennzeichnet, dass** mindestens eine Printplatte (34, 36, 38, 40) auf dem Wärmeleitstab (80) des Kühlkörpers (12), welches aus massivem, wärmeleitendem Metall besteht, aufgebracht und dort isoliert aufliegt und insbesondere in Wärmeleitverbindung mit diesem steht.

5. Lichthärtgerät nach Anspruch 4, **dadurch gekennzeichnet, dass** der Wärmeleitstab (80) im Wesentlichen als Quader ausgebildet ist und insbesondere an allen vier Seiten von Printplatten (34, 36, 38, 40) umgeben ist und an seinem rückwärtigen Bereich die Kühlrippen (22) aufweist.

6. Lichthärtgerät nach einem der Ansprüche 2 bis 5, **dadurch gekennzeichnet, dass** die Bauelemente (60) und/oder die Printplatte (34, 36, 38, 40) den Kühlkörper (12) mindestens teilweise umgebend angeordnet sind.

7. Lichthärtgerät nach einem der Ansprüche 2 bis 6, **dadurch gekennzeichnet, dass** die Bauelemente (60) und/oder die Printplatte in radialen Freiräumen aufgenommen sind, die von den Kühlrippen (20, 22) des Kühlkörpers (12) und von einem Kern des Kühlkörpers (12) begrenzt sind.

8. Lichthärtgerät nach einem der vorhergehenden Ansprüche, **dadurch gekennzeichnet, dass** wenigstens eine Printplatte mindestens teilweise an dem Kühlkörper (12) gelagert ist und sich insbesondere seitlich an dem Kühlkörper (12) entlang erstreckt.

9. Lichthärtgerät nach einem der vorhergehenden Ansprüche, **dadurch gekennzeichnet, dass** mindestens drei Printplatten (34, 36, 38, 40), insbesondere vier Printplatten (34, 36, 38, 40), den Kühlkörper (12) umgeben.

10. Lichthärtgerät nach einem der vorhergehenden Ansprüche, **dadurch gekennzeichnet, dass** mindestens eine Printplatte (34; 36; 38; 40) gegenüber einer weiteren Printplatte (34; 36; 38; 40) beweglich gelagert ist, insbesondere schwenkbar gelagert ist.

11. Lichthärtgerät nach einem der Ansprüche 2 bis 10, **dadurch gekennzeichnet, dass** die Printplatte, insbesondere alle Bauelemente (60), auf ihrer dem Kühlkörper (12) zugewandten oder ihrer vom Kühlkörper (12) abgewandten Seite trägt.

12. Lichthärtgerät nach einem der Ansprüche 2 bis 11, **dadurch gekennzeichnet, dass** die Bauelemente (60) mit der Printplatte in Wärmeleitverbindung stehen und die Printplatte als Kühlelement ausgebildet ist, über welches die von den Bauelementen (60) abgegebene und in die Printplatte eingeleitete Wärme über den Kühlluftstrom (32) abgebbar ist.

13. Lichthärtgerät nach einem der vorhergehenden Ansprüche, **dadurch gekennzeichnet, dass** sich zwischen mindestens einer Printplatte (34, 36, 38, 40) und dem Wärmeleitstab (18) und/oder dem Kühlkörper (12) der erste Kühlluftkanal erstreckt.

14. Lichthärtgerät nach einem der vorhergehenden Ansprüche, **dadurch gekennzeichnet, dass** sich der zweite Kühlluftkanal zwischen den Printplatten (34, 36, 38, 40) und einem Gehäuse des Lichthärtgeräts oder zwischen zwei Gehäuseteilen des Lichthärtgeräts erstreckt.

15. Lichthärtgerät nach einem der Ansprüche 2 bis 14, **dadurch gekennzeichnet, dass** der Kühlluftstrom aus einem Gebläse die Kühlrippen (20, 22) und insbesondere auch die Bauelemente (60) beaufschlagt.

16. Lichthärtgerät nach einem der vorhergehenden Ansprüche, **dadurch gekennzeichnet, dass** der Kühlluftstrom nach dem Passieren der beiden Kühlluftkanäle (92, 96) das Gehäuse in einem Endbereich eines Handgriffes des Lichthärtgeräts verlässt.

17. Lichthärtgerät nach einem der vorhergehenden Ansprüche, **dadurch gekennzeichnet, dass** zwei einander gegenüberliegende Printplatten (34, 36, 38, 40) zur Lichtquelle (14) vorragen und dort Anschlussfahnen einer Stirnprintplatte kontaktieren, die sich im Wesentlichen rechtwinklig zu den Printplatten (34, 36, 38, 40) erstreckt und über welche die Lichtquelle (14) angeschlossen ist.

18. Lichthärtgerät nach einem der vorhergehenden Ansprüche, **dadurch gekennzeichnet, dass** der Wärmeleitstab (18, 80) aus Kupfer und der Kühlkörper (12) insbesondere aus Aluminium oder einer Aluminiumlegierung besteht.

## Claims

1. A light-curing apparatus that is formed pistol-shaped, having an elongated cooling body (12) that Is arranged in the barrel of the pistol-shaped light-curing apparatus and carrying a LED light source at the frontal end face that is directly or indirectly coupled to a metal heat-conducting rod (18; 80), that centrally extends within the cooling body (12) and comprising a copper core, wherein the heat-conducting rod (18; 80) is In thermal communication, at least in its end region facing away from the light source (14), with cooling ribs (20, 22) of the cooling body (12), so that the heat generated by the light source (14) is able to be dissipated in an axial direction of the elongated cooling body (12), wherein a deflection for a cooling air stream (32) is provided, adjacent to the light source (14), between two housing parts or between at least print board (34, 36, 38, 40) and a housing, by means of which deflection the cooling air stream (32) is deflected by at least 90°, and wherein the cooling air stream (32) initially passes through a first cooling air passage (92) and, following deflection (70, 94), through a second cooling air passage (96) or vice versa, and wherein a fan (30) Is arranged at the front face of the cooling body (12) facing away from the fight source (14).

2. The light-curing apparatus according to Claim 1, **characterized in that** the light-curing apparatus comprises components (60) that are especially located next to the conducting rod on at least one print board.

3. The light-curing apparatus according to Claim 2, **characterized in that** at least the components (60) are iocated in a position free of cooling ribs, wherein the cooling body (12) is designed such that cooling ribs (20, 22) radially extend in its front region adjacent to the light source (14) and in Its rear region, wherein, between the cooling ribs (20, 22), a circular extending recess (24) defines the location free of cooling ribs.

4. Light-curing apparatus according to one of the Claims 1 to 2, **characterized In that** at least one print board (34, 36, 38, 40) is applied to and isolatedly abuts the heat-conducting rod (80) of the cooling body (12), consisting of solid heat conducting metal, and especially is in thermal communication therewith.

5. The light-curing apparatus according to Claim 4, **characterized in that** the heat-conducting rod (80) essentially is formed as a cuboid and especially is surrounded by print boards (34, 36, 38, 40) at all four sides, and comprising the cooling ribs (22) on its rearward region.

6. The light-curing apparatus according to one of the Claims 2 to 5, **characterized In that** the components (60) and/or the print board (34, 36, 38, 40) is arranged at least partially surrounding the cooling body (12).

7. The light-curing apparatus according to one of the Claims 2 to 6, **characterized in that** the components (60) and/or the print board is accommodated In the radial free spaces, which are confined by the cooling ribs (20, 22) of the cooling body (12) and by a core of the cooling body (12).

8. The light-curing apparatus according to one of the preceding Claims, **characterized In that** at least one print board is at least partially supported to the cooling body (12) and especially extends laterally along the cooling body (12).

9. The light-curing apparatus according to one of the preceding Claims, **characterized In that** at least three print boards (34, 36, 38, 40), especially four print boards (34, 36, 38, 40) surround the cooling body (12).

10. The light-curing apparatus according to one of the preceding Claims, **characterized in that** at least one print board (34; 36; 38; 40) is movably supported, and especially is pivotably supported in relation to another print board (34; 36; 38; 40).

11. The light-curing apparatus according to one of the Claims 2 to 10, **characterized in that** the print board especially carries all components (60) on its surface facing the cooling body (12) or Its surface facing away from the cooling body (12).

12. The light-curing apparatus according to one of the Claims 2 to 11, **characterized in that** the components (60) are in thermal communication with the print board and the print board is formed as a cooling member, through which the heat emitted from the components (60) and introduced into the print board is able to be discharged via the cooling air stream (32).

13. The light-curing apparatus according to one of the preceding Claims, **characterized in that** the first cooling air passage extends between at least one print board (34, 36, 38, 40) and the heat-conducting rod (18) and/or the cooling body (12) .

14. The light-curing apparatus according to one of the preceding Claims, **characterized in that** the second cooling air passage extends between the print boards (34, 36,38, 40) and a housing of the light-curing apparatus or between two housing parts of the light-curing apparatus.

15. Light-curing apparatus according to one of the Claims 2 to 14, **characterized In that** the cooling air stream is supplied from a fan to the cooling ribs (20, 22) and especially also to the components (60).

16. The light-curing apparatus according to one of the preceding Claims, **characterized in that** the cooling air stream, after passing the two cooling air passages (92, 96), exits the housing towards an end region of a handle of the light-curing apparatus.

17. The light-curing apparatus according to one of the preceding Claims, **characterized in that** two print boards (34, 36, 38, 40) opposite to each other protrude towards the light source (14) and there contacting connecting flags of a front print board that essentially extends perpendicular to the print boards (34, 36, 38, 40) and by which the light source (14) are connected.

18. The light-curing apparatus according to one of the preceding Claims, **characterized in that** the heat-conducting rod (18, 80) consists of copper, and the cooling body (12) especially consists of aluminum or an aluminum alloy.

## Revendications

1. Dispositif de photopolymérisation en forme de pistolet, avec un dissipateur thermique allongé (12), qui est disposé dans le canon du dispositif de photopolymérisation en forme de pistolet et porte une source de lumière LED sur sa face avant, qui est connecté indirectement ou directement, avec une tige métallique conductrice de chaleur (18 ; 80), qui s'étend centralement à l'intérieur du dissipateur thermique (12) et possède un noyau de cuivre, où la tige conductrice de chaleur (18 ; 80) est mise en liaison de conduction thermique au moins avec sa zone d'extrémité détournée de la source de lumière (14) avec des ailettes de refroidissement (20, 22) du dissipateur thermique (12), afin que la chaleur produite par la source de lumière (14) puisse être dissipée dans le sens axial du dissipateur thermique allongé (12), où une déviation pour un flux d'air de refroidissement (32) est fournie avoisinant la source de lumière (14) entre deux parties du boîtier ou entre au moins une carte de circuit imprimé (34, 36, 38, 40) et un boitier, à travers de laquelle le flux d'air de refroidissement (32) sera dévié au moins 90°, et où le flux d'air de refroidissement (32) passe d'abord un premier conduit d'air de refroidissement (92) et après la déviation (70, 94) un deuxième conduit d'air de refroidissement (96) ou vice versa, et où une soufflerie (30) est disposée sur la face avant du dissipateur thermique (12) éloigné de la source de lumière (14).

2. Dispositif de photopolymérisation selon la revendication 1, **caractérisé en ce que** l'unité de photopolymérisation (60) présente des composants, qui se trouvent en particulier à côté de la tige conductrice de chaleur sur au moins une carte de circuit imprimé.

3. Dispositif de photopolymérisation selon la revendication 2, **caractérisé en ce qu'**au moins les composants (60) se trouvent à une position libre d'ailettes de refroidissement, où le dissipateur thermique (12) est réalisé de telle sorte que, dans sa partie avant, avoisinant la source de lumière (14) et dans sa partie arrière des ailettes de refroidissement (20, 22) s'étendent en forme d'étoile. où entre les ailettes de refroidissement (20, 22) un évidement (24) à peu près circulaire définit l'endroit libre d'ailettes de refroidissement.

4. Dispositif de photopolymérisation selon l'une des revendications 1 ou 2, **caractérisé en ce qu'**au moins une carte de circuit imprimé (34, 36, 38, 40) est apposée sur la tige métallique conductrice de chaleur (80) du dissipateur thermique (12), qui est constitué de métal solide, conductrice de chaleur, et y est isolé et en particulier est en liaison de conduction thermique avec celui-ci.

5. Dispositif de photopolymérisation selon la revendication 4, **caractérisé en ce que** la tige métallique conductrice de chaleur (80), est essentiellement formée comme parallélépipède et en particulier est entourée sur les quatre côtés par des cartes de circuits imprimés (34, 36, 38, 40) et sur sa zone arrière présente les ailettes de refroidissement (22).

6. Dispositif de photopolymérisation selon l'une des revendications 2 à 5, **caractérisé en ce que** les composants (60) et/ou les cartes de circuits imprimés (34, 36, 38, 40) sont disposés entourant au moins partiellement le dissipateur thermique (12).

7. Dispositif de photopolymérisation selon l'une des revendications 2 à 5, **caractérisé en ce que** les composants (60) et/ou les cartes des circuits Imprimés sont accueillis dans des espaces radiaux libres, qui sont limitées par les ailettes de refroidissement (20, 22) du dissipateur thermique (12) et un noyau du dissipateur thermique (12).

8. Dispositif de photopolymérisation selon l'une des revendications précédentes, **caractérisé en ce qu'**au moins une carte de circuit Imprimé est au moins partiellement montée sur le dissipateur thermique (12) et s'étend en particulier latéralement le long du dissipateur thermique (12).

9. Dispositif de photopolymérisation selon l'une des revendications précédentes, **caractérisé en ce qu'**au moins trois cartes de circuits imprimés (34, 36, 38,40), en particulier les PCB quatre (34, 36, 38, 40), entourent le dissipateur thermique (12).

10. Dispositif de photopolymérisation selon l'une des revendications précédentes, **caractérisées en ce qu'**au moins une carte de circuit imprimé (34, 36, 38, 40) est montée mobile en face d'une autre carte de circuit Imprimé (34, 36, 38, 40), en particulier est montée pivotant.

11. Dispositif de photopolymérisation selon l'une des revendications 2 à 10, **caractérisé en ce que** la carte de circuit imprimé porte, en particulier tous les composants (60) sur sa face tournée vers le dissipateur thermique (12) ou sur sa face détournée du dissipateur thermique (12).

12. Dispositif de photopolymérisation selon l'une des revendications 2 à 11, **caractérisé en ce que** les composants (60) se trouvent en liaison de conduction thermique avec la carte de circuit Imprimé et la carte de circuit imprimé est formée comme élément de refroidissement, par lequel la chaleur dégagée par les composants (60) et introduite dans la carte de circuit imprimé peut être émise par l'air de refroidissement (32).

13. Dispositif de photopolymérisation selon l'une des revendications précédentes, **caractérisé en ce que** le premier conduit d'air de refroidissement s'étend entre au moins une carte de circuit imprimé (34,36, 38,40) et la tige conductrice de chaleur (18) et/ou le dissipateur thermique (12).

14. Dispositif de photopolymérisation selon l'une des revendications s précédentes, **caractérisé en ce que** le deuxième conduit d'air de refroidissement s'étend entre les cartes de circuits imprimés (34, 36, 38, 40) et un boîtier de l'appareil de photopolymérisation ou entre deux pièces du boîtier de l'appareil de photopolymérisation.

15. Dispositif de photopolymérisation selon l'une des revendications 2 à 14, **caractérisé en ce que** l'air de refroidissement d'une soufflerie alimente les ailettes de refroidissement (20, 22) et en particulier aussi les composants (60).

16. Dispositif de photopolymérisation selon l'une des revendications précédentes, **caractérisé en ce que** le flux d'air de refroidissement après avoir passé les deux conduits d'air de refroidissement (92, 96) quitte le boîtier dans une extrémité d'une poignée de l'appareil de photopolymérisation.

17. Dispositif de photopolymérisation selon l'une des revendications précédentes, **caractérisé en ce que** deux cartes de circuit Imprimé (34, 36, 38, 40) l'une en face de l'autre dépassent la source de lumière (14) et établissent un contact avec les languettes de raccordement d'une carte de circuit Imprimé frontale, qui s'étend essentiellement perpendiculairement aux cartes de circuits imprimés (34, 36, 38, 40) et par lequel la source lumineuse (14) est connectée.

18. Dispositif de photopolymérisation selon l'une des revendications précédentes, **caractérisé en ce que** la tige métallique conductrice de chaleur (18 ; 80) est fabriquée en cuivre et le dissipateur thermique (12) en particulier est fabriqué en aluminium ou en un alliage d'aluminium.
